Europäisches Patentamt

European Patent Office

Office européen des brevets

(19)

(11) **EP 1 661 793 A2**

(12) **DEMANDE DE BREVET EUROPEEN**

(43) Date de publication:
**31.05.2006 Bulletin 2006/22**

(51) Int Cl.:
*B62D 6/00* [(2006.01)] *G06F 19/00* [(2006.01)]

(21) Numéro de dépôt: **05300953.6**

(22) Date de dépôt: **21.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **24.11.2004 FR 0452741**

(71) Demandeur: **Renault s.a.s.**
**92100 Boulogne Billancourt (FR)**

(72) Inventeur: **Claeys, Xavier**
**78000 Versailles (FR)**

(54) **Système et procédé de commande de l'angle de braquage des roues directrices d'un véhicule automobile**

(57) Un système de commande de l'angle de braquage des roues directrices d'un véhicule automobile, comprend un capteur (2) d'angle de volant ($\Omega$) ; un capteur (4) de la vitesse (V) et un capteur (6) de vitesse de lacet ($\psi$). Un actionneur de roues (12) oriente les roues directrices (14) en fonction d'un signal de commande (u_CD). Un module de commande (10) génére le signal de commande (u_CD) de l'actionneur de roues (12) ; un module (8) observateur d'état du véhicule reçoit en entrée les valeurs mesurées par les capteurs (2, 4, 6) et le signal de commande (u_CD) généré par le module de commande (10). Ces paramètres sont entrés dans le module de commande (10) pour l'élaboration du signal de commande (u_CD) de l'actionneur de roues (12).

FIG. 2

EP 1 661 793 A2

**Description**

**DOMAINE TECHNIQUE**

On connaît des véhicules équipés d'un système de direction dans lequel l'angle de braquage des roues directrices du véhicule est découplé de l'angle imposé au volant de direction par le conducteur. Ces systèmes sont de deux types. Selon un premier type, appelé ASF (Active Front Steering), l'orientation des roues directrices est commandée mécaniquement. Dans un autre système, appelé SBW (Steering By Wire), l'orientation des roues est commandée électriquement par l'intermédiaire d'actionneurs de roues entraînés par un moteur électrique.

Le brevet US 6 681 167 (Delphi) décrit un système de ce type. Il concerne un système de commande d'un châssis de véhicule terrestre comprenant des moyens pour conserver en mémoire des valeurs calibrées de paramètre de freinage, des moyens de détection de l'adhérence asymétrique entre les roues et des moyens qui réagissent à une détection d'adhérence asymétrique afin de compenser un mouvement de lacet provoqué par une différence d'adhérence des roues au sol.

Cependant, ce dispositif présente des inconvénients. Son fonctionnement est déclenché par le système anti-blocage des roues (ABS). En conséquence, il n'est pas autonome et il ne peut pas fonctionner en continu. D'autre part, il fonctionne en boucle ouverte de telle sorte que son fonctionnement n'est pas robuste.

La publication de brevet US 2004/0060 765 (Ford Global Technologies) décrit un autre dispositif de ce type. Il concerne un système de contrôle de la stabilité d'un véhicule automobile comportant une pluralité de capteurs qui permettent de mesurer les paramètres d'état dynamique du véhicule. Ces capteurs incluent un capteur d'angle de volant et un capteur d'angle de lacet. Une unité de commande est couplée au capteur d'angle de volant et au capteur d'angle de lacet. Elle détermine un angle de lacet désiré et une correction de l'angle de braquage qui est fonction d'un angle de lacet idéal du véhicule.

Ce dispositif présente également des inconvénients. Il ne permet pas de traiter toutes les situations et d'autres régulateurs doivent être mis en fonctionnement dans certaines situations.

L'invention a pour objet un système et un procédé de commande des roues directrices d'un véhicule automobile qui remédient à ces inconvénients.

Le système de commande comprend un capteur de l'angle de volant de direction du véhicule, un capteur de la vitesse linéaire du véhicule, un capteur de vitesse de lacet du véhicule, au moins un actionneur de roues apte à orienter les roues directrices en fonction d'un signal de commande, un module de commande pour générer le signal de commande de l'actionneur de roues, un module observateur de l'état du véhicule qui reçoit en entrée tout ou partie des valeurs des grandeurs mesurées par les capteurs et, en boucle fermée, le signal de commande généré par le module de commande, ce module observateur d'état estimant les paramètres d'état du véhicule qui ne sont pas mesurés par les capteurs ainsi qu'une valeur d'une éventuelle perturbation subie par le véhicule, ces paramètres étant entrées dans le module de commande pour l'élaboration du signal de commande de l'actionneur de roues.

Selon le procédé :

- on mesure l'angle de volant de direction du véhicule ;
- on mesure la vitesse linéaire du véhicule ;
- on mesure la vitesse de lacet du véhicule ;
- on estime les paramètres d'état du véhicule qui ne sont pas mesurés ainsi qu'une valeur d'une éventuelle perturbation de la trajectoire du véhicule ;
- on élabore un signal de commande d'un actionneur qui oriente les roues directrices en fonction de ce signal de commande.

Grâce à ces caractéristiques, le système et le procédé de l'invention peuvent agir en continu contrairement aux dispositifs de l'art antérieur qui n'agissent qu'au moment du déclenchement du système anti-blocage.

La stratégie de commande utilise un observateur d'état pour estimer les perturbations qui agissent sur le véhicule. Elle ne nécessite par conséquent pas d'informations provenant d'autres systèmes pour agir.

La stratégie de commande présente une structure en boucle fermée. Ceci assure une meilleure précision et une plus grande robustesse qu'une structure en boucle ouverte.

Enfin, la stratégie de commande permet des réglages qui sont fonction de la vitesse du véhicule les gains étant calculés au départ. La synthèse des gains des las de commande et de l'observateur est faite selon un algorithme basé sur le modèle véhicule.

Il est possible de faire des calculs off line des gains en faisant varier la vitesse véhicule.

Dans une réalisation du système de commande le module de commande est un module de feed forward.

Le module de feed forward génère le signal de commande de l'actionneur de roues. Il peut fonctionner seul ou avec l'observateur d'état.

Dans une autre réalisation particulière du système de commande, le module de commande est un module de rejet de perturbations.

Le module de rejet de perturbations élabore le signal de commande de l'actionneur de roues. Ces perturbations comprennent les perturbations extérieures qui s'exercent sur le véhicule, par exemple une rafale de vent ou des différences de coefficients d'adhérence des pneumatiques sur la route. Elles comprennent également les perturbations paramétriques telles que les variations de la masse du véhicule ou la variation des rigidités des dérives des pneus. La perturbation est la composante de la vitesse angulaire de lacet provoquée par une perturbation extérieure ou paramétrique. Le module de rejet de perturbations corrige l'angle de braquage de telle manière que le véhicule suit sa trajectoire comme si aucune perturbation ne s'était exercée sur lui.

Dans une autre réalisation particulière du système de commande, le module de commande est un module de contrôle dynamique qui modifie la dynamique du véhicule.

Dans encore une autre réalisation du système de commande, le module de commande est un module de retour d'état.

Contrairement au module de feed forward, le module de rejet de perturbations, le contrôleur dynamique ou le module de retour d'état ne peuvent pas fonctionner seul, mais seulement avec l'observateur d'état parce qu'ils ont besoin des valeurs élaborées par l'estimateur d'état.

Avantageusement, le système de commande comporte plusieurs modules de commande, chacun de ces modules élaborant un signal de commande de l'actionneur des roues directrices, ces différents signaux étant additionnés algébriquement dans un opérateur de sommation pour fournir un signal global de commande de l'actionneur des roues directrices.

De préférence, le système de commande comporte des interrupteurs d'activation qui permettent d'activer ou désactiver chacun de ces modules de commande. On peut avoir a priori toutes les combinaisons possibles et lorsque l'un ou plusieurs des modules sont activés, la consigne souhaitée est appliquée à l'actionneur. Le module observateur d'état calcule quant à lui le vecteur d'état qui est utilisé ou non par les autres modules.

Le système de commande peut comporter des moyens de détection du fonctionnement ou non d'équipements de contrôle de trajectoire et des moyens pour commander l'activation et/ou la désactivation des modules de commandes en fonction de la détection ou non du fonctionnement de ces équipements de contrôle de trajectoire.

A titre d'exemple non limitatif ces équipements comprennent les systèmes anti-blocage de roues (ABS) et les programmes de stabilité électronique (ESP).

D'autres caractéristiques de l'invention apparaîtront encore à la lecture de la description qui suit d'exemples de réalisation donnés à titre illustratif en référence aux figures annexées. Sur ces figures :

- la figure 1 est une vue schématique d'un premier mode de réalisation d'un système de commande conforme à la présente invention ;
- la figure 2 est une vue schématique générale d'un second mode de réalisation d'un système de commande conforme à la présente invention ;
- la figure 3 est un schéma de détail du module de feed forward du système de la figure 2 ;
- la figure 4 est un schéma du détail du contrôleur dynamique du système de commande de la figure 1.

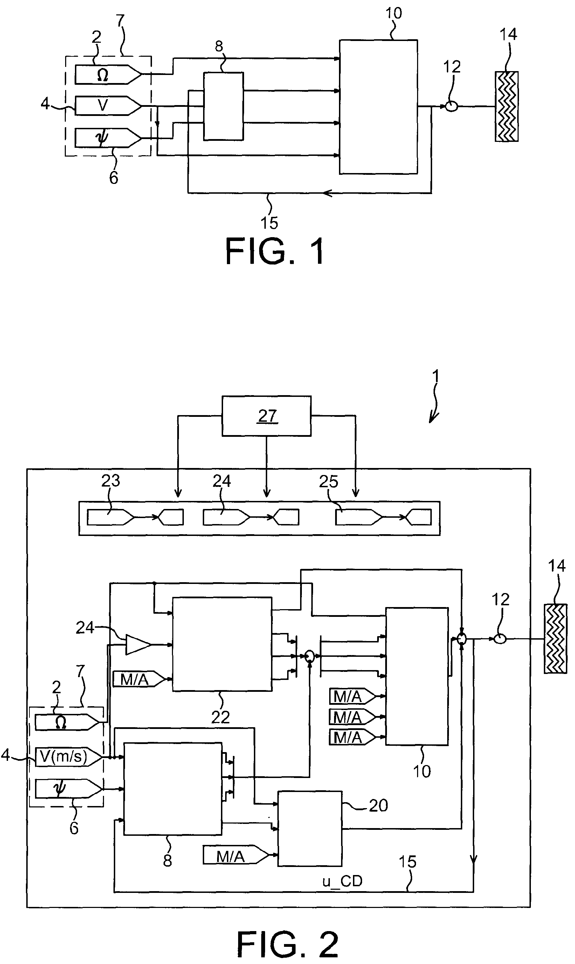

On a représenté sur la figure 1 un premier mode de réalisation d'un système de commande des roues directrices d'un véhicule conforme à la présente invention. Il comprend des capteurs pour mesurer des paramètres de fonctionnement du véhicule. Dans l'exemple représenté, les capteurs comprennent un capteur 2 pour mesurer l'angle de rotation $\Omega$ du volant de direction du véhicule ; un capteur 4 de mesure de la vitesse linéaire V (en mètres par seconde) du véhicule et un capteur 6 de mesure de la vitesse de lacet $\Psi$ du véhicule autour de son centre de gravité en radians par seconde. Le signal V de vitesse linéaire du véhicule peut être obtenu en faisant la moyenne des signaux émis par le dispositif anti-blocage des roues d'un essieu. La vitesse de lacet peut être obtenue, par exemple, par un capteur. Le signal de position du volant peut être obtenu par un capteur de position du volant.

Les capteurs 2, 4 et 6 sont regroupés dans un bloc de signaux d'entrée 7. La référence 8 désigne un module observateur d'état et la référence 10 d'un module de commande. Le module 10 peut avoir des fonctions diverses. Il peut s'agir d'un rejet de perturbations, d'un retour d'état ou d'un feed forward. Dans l'exemple représenté, le module de commande 10 est un contrôleur dynamique permettant de modifier la réponse dynamique du véhicule. L'observateur d'état 8 reçoit un signal de vitesse linéaire V(m/s) du capteur 4 et un signal de vitesse de lacet $\Psi$ du capteur de vitesse de lacet 6 (rad/s).

Le contrôleur dynamique 10 reçoit également le signal de vitesse linéaire V délivré par le capteur 4. Il reçoit en outre l'angle $\Omega$ du volant de direction du véhicule délivré par le capteur 2.

Le module observateur d'état 8 délivre des valeurs estimées des paramètres du véhicule dont la nature dépend du module auquel elles sont destinées. Dans l'exemple, l'observateur d'état 8 calcule une valeur estimée $\hat{\psi}$ de la vitesse de lacet du véhicule autour de son centre de gravité, une valeur estimée $\hat{\beta}$ de la dérive du véhicule, c'est-à-dire l'angle que la trajectoire du véhicule fait avec son axe longitudinal et enfin une valeur estimée $\hat{\delta}$ de l'angle de braquage des roues. Le contrôleur dynamique 10 délivre un signal de commande u_CD à un actionneur 12 d'une roue directrice 14 du véhicule. L'actionneur 12 agit par exemple, sur une biellette de direction solidaire du porte roue de la roue directrice.

Le signal de commande u_CD est réintroduit en boucle fermée dans l'observateur d'état 8.

Le système de commande représenté sur la figure 1 présente l'avantage de pouvoir fonctionner de manière autonome et en continu. En outre, il fonctionne en boucle fermée ce qui lui assure une plus grande robustesse et une plus grande précision.

On a représenté sur la figure 2 un second exemple de réalisation d'un système de commande des roues directrices d'un véhicule conforme à l'invention. Il comporte un bloc d'entrées 7 identique à celui du système décrit et représenté sur la figure 1 constitué d'un capteur 2 de l'angle de volant de direction du véhicule, d'un capteur 4 de la vitesse linéaire du véhicule et d'un capteur 6 de la vitesse de lacet du véhicule autour de son centre de gravité. La vitesse linéaire du véhicule peut aussi être obtenue sans compteur en faisant la moyenne des vitesses des roues arrières. Le système de commande comporte également un observateur d'état général 8, un module de rejet de perturbation 20 un module de feed forward 22 et un contrôleur dynamique 10.

L'observateur 8 peut par exemple être contruit à partir d'un modèle deux roues sans ballant en faisant l'hypothèse qu'une perturbation ($\Delta$) de type échelon peut agir directement sur la vitesse de lacet du véhicule sur un intervalle de temps fini. Une dynamique qui modifie le comportement de l'actionneur peut être ajoutée.

L'équation d'état associée au modèle étendu par la perturbation est la suivante (X = [$\dot\Psi$ $\beta\delta_f\Delta$]) :

$$\dot{X} = ax + B_1\delta_f^d$$

$$Y = CX + D\delta_f^d$$

$$A = \begin{bmatrix} -\dfrac{D_1L_1^2 + D_2L_2^2}{VI_\Psi} & \dfrac{D_2L_2 - D_1L_1}{I_\Psi} & \dfrac{D_1L_1}{I_\Psi} & 0 \\ -1 + \dfrac{D_2L_2 - D_1L_1}{MV^2} & \dfrac{D_1 + D_2}{MV} & \dfrac{D_1}{MV} & 0 \\ 0 & 0 & -\dfrac{1}{\tau} & 0 \\ 0 & 0 & 0 & 0 \end{bmatrix}, B_1 = \begin{bmatrix} 0 \\ 0 \\ \dfrac{1}{\tau} \\ 0 \end{bmatrix}$$

$$C = [1 \ 0 \ 0 \ 1], D = [0]$$

où Y= $\dot\psi$ + $\Delta$ est la sortie considérée et $\Delta$ est la perturbation qui agit directement sur la sortie.

A partir de ce modèle, on développe la théorie classique des observateurs linéaires. La seule observation utilisée est Y, à savoir la vitesse de lacet donnée par capteur. On recherche un observateur $\hat{X} = \left[\hat{\dot{\psi}} \ \hat{\beta} \ \hat{\delta}_f \ \hat{\Delta}\right]$ du vecteur d'état X = [$\dot{\psi}$ $\beta$$\delta_f$ $\Delta$]. L'observateur permet donc d'estimer les états du véhicule et l'ensemble des perturbations qui agissent sur le véhicule. La structure de l'estimateur peut donc être la suite :

$$\dot{\hat{X}} = A\hat{X} + B_1\delta_f^d + K_{obs}(Y - C\hat{X})$$

$$\hat{Y} = C\hat{X} + D\delta_f^d$$

$$A = \begin{bmatrix} -\dfrac{D_1 L_1^2 + D_2 L_2^2}{VI_{\Psi}} & \dfrac{D_2 L_2 - D_1 L_1}{I_{\Psi}} & \dfrac{D_1 L_1}{I_{\Psi}} & 0 \\ -1 + \dfrac{D_2 L_2 - D_1 L_1}{MV^2} & \dfrac{D_1 + D_2}{MV} & \dfrac{D_1}{MV} & 0 \\ 0 & 0 & -\dfrac{1}{\tau} & 0 \\ 0 & 0 & 0 & 0 \end{bmatrix}, B_1 = \begin{bmatrix} 0 \\ 0 \\ \dfrac{1}{\tau} \\ 0 \end{bmatrix}$$

$$C = [1 \ \ 0 \ \ 0 \ \ 1], D = [0]$$

avec ^ qui signifie que les valeurs sont estimées et $K_{obs}(V)$ qui est le paramètre de réglage de l'observateur qui évolue en fonction de la vitesse véhicule.

Une estimation de l'état du véhicule $\hat{X} = \left[\hat{\dot{\psi}} \ \hat{\beta} \ \hat{\delta}_f \ \hat{\Delta}\right]$ peut, selon les cas, être utilisée par les blocs décrits ci-dessus.

Le module de feed forward 22 de type boucle ouverte à la commande de l'angle de braquage des roues directrices du véhicule permet d'améliorer les performances de cette dernière sans risque de déstabilisation du système. Le module de feed forward comporte, ou est précédé d'un amplificateur 24 qui reçoit le signal d'angle du volant de véhicule. L'amplificateur 24 a un gain statique variable afin de faire varier la démultiplication de la direction, notamment en fonction de la vitesse du véhicule. La composante de l'angle de braquage des roues qui résulte de l'action sur le volant par le conducteur du véhicule peut être obtenu par le calcul cinématique donnant la relation entre l'angle de volant et l'angle de roues directrices.

Le module de feed forward 22 calcule au moyen d'un modèle mathématique, notamment un modèle de véhicule à deux roues sans ballant, alimenté par les informations d'angle de roues avant (ou d'angle de volant de direction) et de vitesse linéaire du véhicule, la vitesse de lacet et la dérive au centre de gravité du véhicule. Le module calcule également, à partir des sorties du modèle et de la vitesse du véhicule une commande (u-FF) qui permet de typer les réponses dynamique et statique du véhicule. Cette commande peut être générée par un contrôleur de type « placement de pôles », « synthèse linéaire quadratique », PID ou autre. Le module applique sur le véhicule la même commande que celle envoyée sur le modèle à deux roues.

Le contrôleur dynamique 10 apporte une contribution de type boucle fermée. Il joue le même rôle que le feed forward dynamique lorsque ce dernier n'est pas activé. Si le feed forward dynamique est activé, la contribution du contrôleur dynamique 10 fera en sorte que l'éventuel écart entre les états de référence du feed forward et les états du véhicule fournit par l'observateur d'état 8 soit nul.

La fonction du contrôleur dynamique 10 est de calculer à partir de l'état estimé du véhicule fourni par l'observateur d'état 8 et de la vitesse V du véhicule une commande (u_DYN) qui permet de typer ou de compléter le typage (si le feed forward est activé) des réponses dynamique et statique du véhicule. Cette commande peut être générée par un contrôleur de type « placement de pôles », « synthèse linéaire quadratique », PID ou autre.

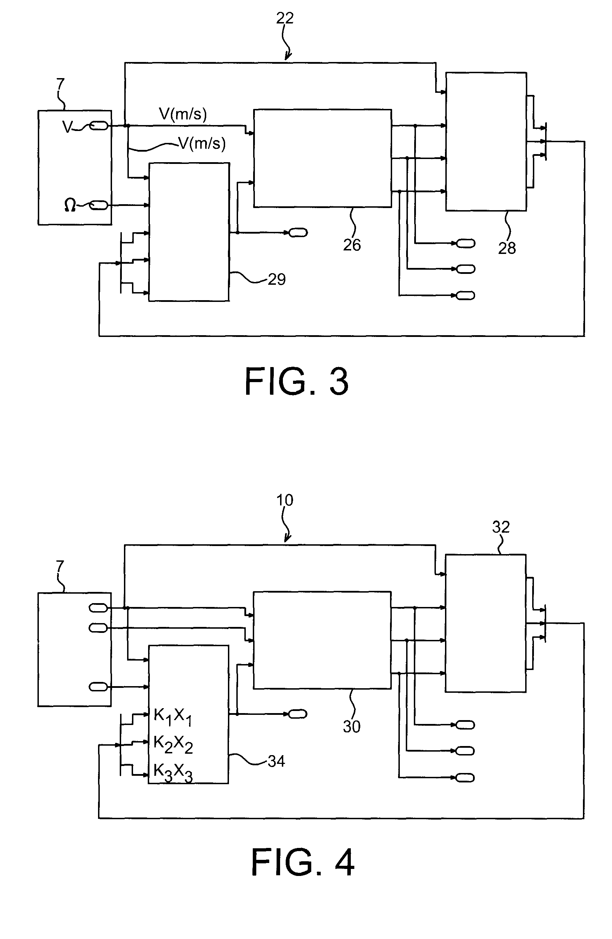

On a détaillé sur la figure 3 les composants du feed forward dynamique 22 du système de commande de l'angle de braquage représenté sur la figure 2.

Comme on l'a exposé précédemment, le signal de vitesse V du véhicule peut être obtenu en faisant la moyenne de la vitesse de rotation des roues délivrée par le système anti-blocage des roues d'un même essieu, de préférence l'essieu arrière. En termes, la contribution à l'orientation des roues avant due au volant de direction peut être obtenue par un capteur de position du volant associé à un calcul cinématique donnant la relation entre l'angle du volant et l'angle de roues directrices, par exemple les roues avant.

Le feed forward comporte un modèle de véhicule 26. Ce modèle a pour objectif de prédire le comportement intrinsèque du châssis du véhicule, c'est-à-dire de prédire sa réponse en vitesse de lacet ($\dot{\psi}$) et en dérive ($\beta$) en fonction de l'angle de braquage des roues avant. Cet angle de braquage peut être constitué avantageusement, de la sortie de la commande retardée d'un pas de temps.

Le modèle de véhicule 26 peut par exemple être construit à partir d'un modèle dit « deux roues sans ballant ». Une dynamique qui modélise le comportement de l'actionneur 12 des roues directrices 14 peut être ajoutée. Dans ce cas, le modèle prédit également l'angle de braquage ($\delta_f$) en fonction de l'angle de braquage demandé à l'actionneur ($\delta_f{}^d$) retardé d'un pas de temps.

L'équation d'état associée à ce modèle est la suivante :

$$
\begin{bmatrix} \ddot{\psi}_c \\ \dot{\beta}_c \\ \dot{\delta}_f \end{bmatrix} = \begin{bmatrix} \dfrac{D_1 L_1^2 + D_2 L_2^2}{V I_Z} & \dfrac{D_2 L_2 - D_1 L_1}{I_z} & \dfrac{D_1 L_1}{I_z} \\ -1 + \dfrac{D_2 L_2 - D_1 L_1}{M V^3} & -\dfrac{D_1 + D_2}{M V} & \dfrac{D_1}{M V} \\ 0 & 0 & -\dfrac{1}{\tau} \end{bmatrix} \begin{bmatrix} \dot{\psi}_c \\ \beta_c \\ \delta_f \end{bmatrix} + \begin{pmatrix} 0 \\ 0 \\ \dfrac{1}{\tau} \end{pmatrix} \delta_f^d
$$

$$
Y = \begin{pmatrix} 1 & 0 & 0 \\ 0 & 1 & 0 \\ 0 & 0 & 1 \end{pmatrix} \begin{bmatrix} \dot{\psi}_c \\ \beta_c \\ \delta_f \end{bmatrix}
$$

où y est la sortie considérée.

Le module de feed forward 22 comporte également un bloc 28 qui calcule la partie du feed forward dynamique ($\delta_{\text{FF-Transitoire}}$) qui permet d'agir sur la dynamique de la réponse transitoire. Il s'agit d'un placement de pôles classique. Si on note :

$$
\begin{bmatrix} a_1(V) + b_1(V).i & a_2(V) + b_2(V).i & a_3(V) + b_3(V).i \end{bmatrix}
$$

les trois pôles du système décrit ci-dessus (a(V) et b(V) correspondants respectivement aux parties réelles et imaginaires de chacun des pôles à la vitesse (V), on cherche le correcteur $G_{cde} = [K_1(V)\ K_2(V)\ K_3(V)]$ qui placera les pôles du système bouclé en :

$$[\text{Tdym}_{11}(V).a_1(V)+\text{Tdyn}_{12}(V).b_1(V).i \quad \text{Tdyn}_{21}(V).a$$

$$_2(V)+\text{Tdyn}_{22}$$

$$(V).b_2(V).i$$

$$\text{Tdyn}_{31}(V).a_3(V)+\text{Tdyn}_{32}(V).b_3(V).b_3(V).i$$

$\text{Tdyn}_{11}$, $\text{Tdyn}_{12}$, $\text{Tdyn}_{21}$, $\text{Tdyn}_{22}$, $\text{Tdyn}_{31}$, $\text{Tdyn}_{32}$ étant les paramètres de réglage (variables en fonction de la vitesse du véhicule V) de la réponse transistoire du véhicule.

Le correcteur $G_{cde}(Vo)$ peut se calculer, pour chaque vitesse Vo choisie, par la méthode décrite dans [1].

Le correcteur $G_{cde}(V)$ est ensuite interpôlé en fonction de la vitesse.

On obtient ainsi la première partie de la commande :

$$\delta_{FF-Transitoire} = K_1(V).\dot{\psi}_c + K_2(V).\beta_c + K_3(V).\delta_f$$

Remarque ($i\varepsilon[1,...,3]$)

Pour les paramètres $\text{Tdyn}_{i1}$

- si les paramètres de réglage sont égaux à 1, on ne modifie pas la réponse dynamique du véhicule,
- un paramètre supérieur à 1 signifie qu'on cherche à augmenter la vivacité de la réponse véhicule,
- un paramètre inférieur à 1 signifie qu'on cherche à diminuer la vivacité de la réponse véhicule.

Pour les paramètres $\text{Tdyn}_{i2}$

- si les paramètres de réglage sont égaux à 1, on ne modifie pas la réponse dynamique du véhicule,
- un paramètre supérieur à 1 signifie qu'on cherche à rendre plus oscillante la réponse véhicule (ceci joue également sur l'impression d'une plus grande vivacité du véhicule),
- un paramètre inférieur à 1 signifie qu'on cherche à amortir la réponse du véhicule (ceci joue également sur l'impression d'une plus faible vivacité du véhicule).

Exemple de réglage :

$\text{Tdyn}_{11}$=0.8
$\text{Tdyn}_{12}$=0
$\text{Tdyn}_{21}$=0.8
$\text{Tdyn}_{22}$=0
$\text{Tdyn}_{31}$=0.8
$\text{Tdyn}_{32}$=0

Ce réglage permet de ralentir la réponse dynamique du véhicule et de supprimer les oscillations (ou surtensions) en vitesse de lacet et dérive du véhicule. A vitesse élevée (90km/h par exemple), ce réglage permet par conséquent d'optimiser le passage d'un « double changement de file ».

Enfin le module de feed forward 22 comporte un bloc de gain statique 29.

Ce bloc 29 calcule la partie du feed forward ($\delta_{FF-statique}$) qui permet d'agir sur la réponse statique du véhicule. Elle permet donc de modifier la valeur stabilisée de la vitesse de lacet obtenue suite à un coup de volant d'amplitude donnée. On exprime le résultat par comparaison avec le gain statique qu'on obtiendrait sur le véhicule muni d'une direction classique non découplée :

$$\left[\frac{\dot{\psi}_{STABILISE}}{\delta_f}\right]_{SBW} = Tgs\left[\frac{\dot{\psi}_{STABILISE}}{\delta_f}\right]_{vehclassique}$$

où Tgs est le paramètre de réglage qui peut varier, si nécessaire, en fonction de la vitesse V.

- Le transfert du système bouclé par la commande est donné par

$$\mathtt{T_1(s) = C(sI-A+BG_{cde})^{-1}B}$$

- Le transfert du système en boucle ouverte est donné par

$$\mathtt{T_1^{ref}(s) = C(sI-A)^{-1}B}$$

Le gain de feed forward qui maintient la caractéristique statique du véhicule en boucle fermée s'exprime dans ce cas par :

$$K_{ff} = \frac{T_1^{ref}(0)}{T_1(0)} = 1 - K_3 - K_2 T_B - K_1 t_A$$

avec

$$\dot{\psi}_{statistique} = T_A(0)\delta_{statique}$$

$$\beta_{statique} = T_B(0)\delta_{statique}$$

où

$$T_A(0) = \frac{D_1 D_2 (L_1 + L_2)V}{D_1 D_2 (L_1 + L_2)^2 + MV^2(D_2 L_2 - D_1 L_1)}$$

$$T_B(0) = \frac{D_1(D_2 L_2^2 - MV^2 L_1 + D_2 L_2 L_1)}{D_1 D_2 (L_1 + L_2)^2 + MV^2(D_2 L_2 - D_1 L_1)}$$

La deuxième partie du feed forward dynamique se calcule en fonction de Tgs (qui permet de modifier le gain statique du système) de la façon suivante :

$$\mathtt{\delta_{FF\text{-}statique} = T_{gs}.K_{ff}\delta_f}$$

Remarque :

- si Tgs est égal à 1, on ne modifie pas la réponse statique du véhicule,
- si Tgs est supérieur à 1, on diminue la réponse statique du véhicule,
- si Tgs est inférieur à 1, on augmente la réponse statique du véhicule,

Exemple de réglage :

Tgs=0.8, pour une vitesse de 90km/h, permet de rendre la réponse du véhicule plus directe et donc d'optimiser le passage d'un double changement de file.

Finalement, le feed forward dynamique S'écrit : $\delta_{FF} = \delta_{FF\text{-}transitoire} - \delta_{FF\text{-}statique}$.

On a représenté sur la figure 4 le détail de la réalisation du contrôleur dynamique 10 du système de commande de la figure 2.

Les signaux d'entrée sont fournis par le bloc 7. La commande nécessite les mesures ou les signaux suivant : vitesse linéaire du véhicule, vitesse de lacet et angle de roue avant. Ces signaux sont obtenus comme décrit précédemment. Le contrôleur dynamique 10 comporte également un observateur d'état 30 intégrant un modèle de véhicule. Cet observateur d'état est identique à l'observateur d'état 26 qui a été décrit en référence à la figure 3. En conséquence, sa description ne sera pas reprise.

Le contrôleur dynamique 10 comporte également un bloc 32 de partie transitoire.

Ce bloc cacule la commande ($\delta_{PP\text{-}transitoire}$) qui permet d'agir sur la dynamique de la réponse transitoire. Il s'agit d'un placement de pôles classique. Si on note :

$$[a_1(V) + b_1(V).i \quad a_2(V) + b_2(V).i \quad a_3(V) + b_3(V).i]$$

les trois pôles du système décrit ci-dessus (a(V)+ et b(V) correspondants respectivement aux parties réelles et imaginaires de chacun des pôles à la vitesse V), on cherche le correcteur $G_{cde} = [K_1(V)\, K_2(V)\, K_3(v)]$ qui placera les pôles du système bouclé en :

$$[Tdym_{11}(V).a_1(V) + Tdyn_{12}(V).b_1(V).i \; Tdyn_{21}(V).a$$

$$_2(V) + Tdyn_{22}$$

$$(V).b_2(V).i$$

$$Tdyn_{31}(V).a_3(V) + Tdyn_{32}(V).b_3(V).b_3(V).i$$

$Tdym_{11}$, $Tdyn_{12}$, $Tdyn_{21}$, $Tdyn_{22}$, $Tdyn_{31}$ étant les paramètres de réglage (variables en fonction de la vitesse du véhicule V) de la réponse transitoire du véhicule.

Le correcteur $G_{cde}(Vo)$ peut se calculer pour chaque vitesse Vo choisie, par la méthode décrite dans [1].

Le correcteur $G_{cde}5V$) est ensuite interpôlé en fonction de la vitesse.

On obtient ainsi la première partie de la commande :

$$\delta_{pp-Transitoire} = K_1(V).\hat{\dot{\psi}} + K_2(V).\hat{\beta} + K_3(V).\hat{\delta}_f$$

Remarque (i$\varepsilon$[1,...,3]) :

Pour les paramètres $Tdyn_{i1}$

- si les paramètres de réglage sont égaux à 1, on ne modifie pas la réponse dynamique du véhicule,

- un paramètre supérieur à 1 signifie qu'on cherche à augmenter la vivacité de la réponse véhicule,
- un paramètre inférieur à 1 signifie qu'on cherche à diminuer la vivacité de la réponse véhicule.

Pour les paramètres Tdyn$_{i2}$

- si les paramètres de réglage sont égaux à 1, on ne modifie pas la réponse dynamique du véhicule,
- un paramètre supérieur à 1 signifie qu'on cherche à rendre plus oscillante la réponse véhicule (ceci joue également sur l'impression d'une plus grande vivacité du véhicule),
- un paramètre inférieur à 1 signifie qu'on cherche à amortir la réponse du véhicule (ceci joue également sur l'impression d'une plus faible vivacité du véhicule).

Exemple de réglage (feed forward dynamique non activé) :

Tdyn$_{11}$=0.8
Tdyn$_{12}$=0
Tdyn$_{21}$=0.8
Tdyn$_{22}$=0
Tdyn$_{31}$=0.8
Tdyn$_{32}$=0

Ce réglage permet de ralentir la réponse dynamique du véhicule et de supprimer les oscillations (ou surtensions) en vitesse de lacet et dérive du véhicule. A vitesse élevée (90km/h par exemple), ce réglage permet par conséquent d'optimiser le passage d'un double changement de file.
Exemple de réglage (feed forward dynamique activé) :
Dans ce cas, cette contribution doit garantir un écart nul entre les états de référence (du feed forward) et les états du véhicule tout en étant robuste. Par conséquent, dans cette configuration, un exemple est d'effectuer le réglage en fonction de celui l'observateur pour assurer le compromis performance/robustesse [2].
Enfin, le contrôleur dynamique 10 comporte un bloc 34 permettant de calculer la partie statique de la commande.
Ce bloc calcule la partie du feed forward ($\delta_{PP-statistique}$) qui permet d'agir sur la réponse statique du véhicule. Elle permet donc de modifier la valeur stabilisée de la vitesse de lacet obtenue suite à un coup de volant d'amplitude donnée. On exprime le résultat par comparaison avec le gain statique qu'on obtiendrait sur le véhicule muni d'une direction classique non découplée :

$$\left[ \frac{\dot{\psi}_{STABILISE}}{\delta_f} \right]_{SBW} = Tgs \left[ \frac{\dot{\psi}_{STABILISE}}{\delta_f} \right]_{VEH\ CLASSIQUE}$$

où Tgs est le paramètre de réglage qui peut varier, si nécessaire, en fonction de la vitesse V.

- Le transfert du système bouclé par la commande est donné par

$$T_1(s) = C(sI-A+BG_{cde})^{-1}B$$

- Le transfert du système en boucle ouverte est donné par

$$T_1^{ref}(s) = C(sI-A)^{-1}B$$

Le gain de feed forward qui maintient la caractéristique statique du véhicule en boucle fermée s'exprime dans ce cas par :

$$K_{ff} = \frac{T_1^{ref}(0)}{T_1(0)} = 1 - K_3 - K_2 T_B - K_1 T_A$$

avec

$$\dot{\psi}_{STATIQUE} = T_A(0)\delta_{STATIQUE}$$

$$\beta_{STATIQUE} = T_B(0)\delta_{STATIQUE}$$

où

$$T_A(0) = \frac{D_1 D_2 (L_1 + L_2)V}{D_1 D_2 (L_1 + L_2)^2 + MV^2 (D_2 L_2 - D_1 L_1)}$$

$$T_B(0) = \frac{D_1 D_2 L_2^2 - mv^2 L_1 + D_2 L_2 L_1}{D_1 D_2 (L_1 + L_2)^2 + MV^2 (D_2 L_2 - D_1 L_1)}$$

La deuxième partie du feed forward dynamique se calcule en fonction de Tgs (modification du gain statique du système) de la leçon suivante :

$$\delta_{pp\text{-}statique} = T_{gs} K_{ff} \delta_f$$

Remarques :

- si Tgs est égal à 1, on ne modifie pas la réponse statique du véhicule,
- si Tgs est supérieur à 1, on diminue la réponse statique du véhicule,
- si tgs est inférieur à 1, on augmente la réponse statique du véhicule,

Exemple de réglage (Feed forward dynamique non activé) :
Tgs=0.8, pour une vitesse de 90km/h, permet de rendre la réponse du véhicule plus directe et donc optimiser le passage d'un double changement de file.
Remarque :

Si le feed forward dynamique est activé, Tgs est toujours égal à 1, car dans ce cas le but n'est pas de changer la réponse statique du véhicule, mais d'annuler l'écart entre les états de référence (du feed forward) et les états du véhicule.
Finalement, la commande s'écrit :

$$\delta_{pp} = \delta_{pp\text{-}transitoire} - \delta_{pp\text{-}statitique}$$

Le système de commande comporte un bloc 20 de rejet de perturbations. La commande permet de rejeter de manière asymptotique la perturbation qui agit sur le système en la rendant inobservable vis-à-vis de la sortie considérée (vitesse de lacet du véhicule). Le bouclage se fait donc sur la perturbation estimée par l'observateur ($\hat{\Delta}$).

L'expression de la commande est $\delta_{RP}=G_\Delta\hat{\Delta}$ avec pour le cas considéré.

Le transfert $G_\Delta$ est construit de telle sorte que la perturbation $\Delta$ soit inobservable vis-à-vis de la sortie.

$$G_\Delta=G_{cde}T_a+G_a$$

avec

$$G_a = \frac{MV^2 D_2 L_2 - MV^2 D_1 L_1 + 2 D_2 L_2 D_1 L_1 + D_2 D_1 L_2^2 + D_2 D_1 L_1^2}{VD_2 D_1 (L_1 + L_2)}$$

$$T_a \left[ \begin{array}{c} 1 \\ \dfrac{D_2 L_1 L_2 - MV^2 L_1 + D_2 L_2^2}{VD_2 (L_1 + L_2)} \\ \dfrac{MV^2 D_2 L_2 - MV^2 D_1 L_1 + 2 D_2 L_2 D_1 L_1 + D_2 D_1 L_2^2 + D_2 D_1 L_1^2}{VD_2 D_1 (L_1 + L_2)} \end{array} \right]$$

Par ailleurs $G_{cde}$ est construit en utilisant les principes de commande classiques décrits plus haut. Lorsque le retour d'état est inactif, $G_{cde}=0$.

Des interrupteurs 23, 24, 25 permettent d'activer ou de désactiver chacun des modules du système de commande. Ces interrupteurs peuvent être commandés manuellement. L'interrupteur 23 permet d'activer le rejet de perturbations, l'interrupteur 24 permet d'activer ou de de désactiver le feed forward et l'interuupteur 25 permet d'activer ou désactiver le module de commande dynamique 10.

Les interrupteurs d'activation désactivation des différents blocs 23, 24, 25 permettent d'actionner les différentes configurations possibles. Si les interrupteurs sont égaux à un, la contribution considérée est activée. Si les interrupteurs sont égaux à zéro, la contribution considérée n'est pas activée.

La possibilité d'activer ou de désactiver ces interrupteurs de façon manuelle permet d'utiliser la structure de l'invention comme un outil de développement très intéressant pour le choix et la mise au point de la commande. En effet, à travers cette structure complète, il est possible de tester différentes combinaisons et de comparer leurs performances.

Une variante du procédé consiste à appliquer les différentes contributions de la commande à des moments opportuns. Pour ce faire, il suffit d'activer ou de désactiver les interrupteurs 23, 24, 25 automatiquement, lors de situations bien identifiées, en triggant la commande par un signal qui détecte ces dernières.

Par exemple, lors d'un déclenchement du système anti-blocage 27 du fait d'une perte d'adhérence, il est préférable de maintenir le rejet de perturbations. A l'inverse, certains déclenchements des programmes de stabilité électronique ne doivent pas être compensés comme des perturbations classiques. En conséquence, lorsque ces programmes sont activés le rejet de perturbations 20 est désactivé.

D'autres caractéristiques complémentaires ou alternatives, du système de commande de l'invention sont énumérés ci-après :

- le module de rejet de perturbations 20 reçoit en entrée le signal de vitesse V du véhicule délivré par le capteur de vitesse 4 du véhicule et une valeur estimée de la perturbation calculée par l'observateur d'état 8 ;
- le module de feed forward 22 reçoit en entrée le signal de vitesse V délivré par le capteur de vitesse 4, le signal $\Omega$ de l'angle de volant, une valeur estimée de la vitesse de lacet et une valeur estimée de l'angle de dérive du véhicule en son centre de gravité et délivre un signal de vitesse de lacet de référence $\Psi_{ref}$, un signal de référence $\delta_{ref}$ de l'angle de braquage et un signal de référence $\beta_{réf}$ D'angle de dérive au centre de gravité du véhicule ;

- le module de rejet de perturbations 20 reçoit en entrée les informations d'angle de braquage de volant de direction $\Omega$, de vitesse linéaire du véhicule V ainsi que des valeurs estimées de la vitesse de lacet et de l'angle de dérive au centre de gravité du véhicule.

Avantageusement, selon le procédé, on règle le véhicule en fonction de la vitesse en calculant les gains au départ. Dans une mise en oeuvre particulière, on régle indépendamment les parties statique et dynamique de la réponse du véhicule à un coup de volant.

**Références :**

[1] Kautsky, J. et N.K. Nichols, Robust pole assignment in linear state feedback, Int.J. Control, 41 (1985), pp. 1129-1155.

[2] Philippe de Larminat, Automatique, Commande des systèmes linéaires, Hermès 1993.

**Revendications**

1. Système de commande de l'angle de braquage des roues directrices d'un véhicule automobile, comprenant un capteur (2) de l'angle de volant de direction ($\Omega$) du véhicule ; un capteur (4) de la vitesse linéaire (V) du véhicule et un capteur (6) de la vitesse de lacet ($\Psi$) du véhicule, **caractérisé en ce qu'**il comprend au moins un actionneur de roues (12) apte à orienter les roues directrices (14) en fonction d'un signal de commande (u_CD) ; un module de commande (10) pour générer le signal de commande (u_CD) de l'actionneur de roues (12) ; un module (8) observateur d'état du véhicule qui reçoit en entrée tout ou partie des valeurs des grandeurs mesurées par les capteurs (2, 4, 6) et, en boucle fermée, le signal de commande (u_CD) généré par le module de commande (10) ; ce module d'observateur d'état (8) estimant les paramètres d'état du véhicule qui ne sont pas mesurés par les capteurs (2, 4, 6) ainsi qu'une valeur d'une éventuelle perturbation subie par le véhicule ; ces paramètres étant entrés dans le module de commande (10) pour l'élaboration du signal de commande (u_CD) de l'actionneur de roues (12).

2. Système de commande selon la revendication 1, **caractérisé en ce que** le module de commande (10) est un module de feed forward et **en ce que** le signal de commande (u_CD) est appelé (u_FF).

3. Système de commande selon la revendication 1, **caractérisé en ce que** le module de commande est un module de rejet de perturbations.

4. Système de commande selon la revendication 1, **caractérisé en ce que** le module de commande est un module de contrôle dynamique et **en ce que** le signal de commande (u_CD) est appelé (u_DYN).

5. Système de commande selon la revendication 1, **caractérisé en ce que** le module de commande est un module retour d'état.

6. Système de commande selon l'une quelconque des revendications 1 à 5, **caractérisé en ce qu'**il comporte plusieurs modules de commandes (8, 10, 20, 22), chacun de ces modules élaborant un signal de commande de l'actionneur (12) des roues directrices (14), ces différents signaux étant additionnés algébriquement dans un opérateur de sommation pour fournir un signal global de commande de l'actionneur des roues directrices (12).

7. Système de commande selon la revendication 6, **caractérisé en ce qu'**il comporte des interrupteurs d'activation (23, 24, 25) qui permettent d'activer ou désactiver chacun des modules de commande (8, 10, 20, 22).

8. Système de commande selon la revendication 7, **caractérisé en ce qu'**il comporte des moyens (27) de détection du fonctionnement ou non d'équipements du contrôle de trajectoire et des moyens pour commander l'activation et/ou la désactivation des modules de commande (8, 10 ,20 ,22) en fonction de la détection du fonctionnement ou non de ces équipements de contrôle de trajectoire.

9. Système de commande selon la revendication 8, **caractérisé en ce que** les équipements de contrôle de trajectoire comprennent les systèmes anti-blocage de roues et les programmes de stabilité électronique.

10. Système de commande selon l'une quelconque des revendications 1 à 9, **caractérisé en ce que** le module d'observateur d'état (8) reçoit en entrée les signaux de vitesse linéaire (V) et les signaux de vitesse de lacet (Ψ) du véhicule, ainsi que la boucle du retour du signal de commande (u_CD) de l'actionneur (12) des roues directrices du véhicule, ce module (8) délivrant une valeur estimée de la vitesse de lacet ($\hat{\psi}$), une valeur estimée ($\hat{\beta}$) de l'angle de dérive du véhicule, une valeur estimée ($\hat{\delta}$) de l'angle de braquage des roues directrices du véhicule ainsi qu'une valeur estimée de la perturbation ($\hat{\Delta}$).

11. Système de commande selon l'une quelconque des revendications 3 et 6 à 10, **caractérisé en ce que** le module de rejet de perturbations (20) reçoit en entrée le signal de vitesse (V) du véhicule délivré par le capteur de vitesse (4) du véhicule et une valeur estimée de la perturbation calculée par l'observateur d'état (8).

12. Système de commande selon l'une quelconque des revendications 2 et 6 à 10, **caractérisé en ce que** le module de feed forward (22) reçoit en entrée le signal de vitesse (V) du véhicule délivré par le capteur de vitesse (4) du véhicule, le signal (Ω) de l'angle de volant de direction du véhicule une valeur estimée de la vitesse de lacet et une valeur estimée de l'angle de dérive du véhicule en son centre de gravité et délivrant un signal de vitesse de lacet de référence ($\Psi_{ref}$) un signal de référence dans l'angle de braquage ($\delta_{ref}$) et un signal de référence d'angle de dérive au centre de gravité du véhicule ($\beta_{ref}$).

13. Système de commande selon la revendication 12, **caractérisé en ce que** le module de feed forward (22) comporte un amplificateur qui reçoit le signal (Ω) d'angle de volant du véhicule, ledit amplificateur ayant un gain statique variable afin de faire varier la démultiplication de la direction en fonction de la vitesse (V) du véhicule.

14. Système de commande selon l'une des revendications 3 et 6 à 13, **caractérisé en ce que** le module de rejet de perturbations (20) reçoit en entrée les informations d'angle de braquage de volant de direction (Ω) de vitesse linéaire du véhicule (V) ainsi que des valeurs estimées de la vitesse de lacet et de l'angle de dérive au centre de gravité du véhicule.

15. Système de commande selon l'une quelconque des revendications 1 à 14, **caractérisé en ce que** les signaux de commande (u_CD) du ou des modules de commande (8, 10, 20, 22) sont générés par un contrôleur de type placement de pôles, synthèse linéaire quadratique, PID ou autre.

16. Système de commande selon l'une quelconque des revendications 1 à 15, **caractérisé en ce que** le module observateur d'état (8) est construit à partir d'un modèle deux roues sans ballant.

17. Système de commande selon l'une quelconque des revendications 1 à 16, **caractérisé en ce que** le module d'observateur d'état (8) intègre un modèle de l'actionneur (12) des roues directrices (14).

18. Procédé de commande de l'angle de braquage des roues directrices d'un véhicule automobile, comprenant les étapes suivantes :

   - mesure de l'angle (Ω) de volant de direction du véhicule ;
   - mesure de la vitesse linéaire (V) du véhicule ;
   - mesure de la vitesse de lacet (Ψ) du véhicule ;
   - estimation des paramètres d'état du véhicule qui ne sont pas mesurés ainsi qu'une valeur d'une éventuelle perturbation de la trajectoire du véhicule ;
   - élaboration d'un signal de commande (u_CD) d'un actionneur de roues (12) qui oriente les roues directrices (14) du véhicule en fonction de ce signal de commande (u_CD).

19. Procédé selon la revendication 18,
   **caractérisé en ce que** l'on règle le véhicule en fonction de la vitesse en calculant les gains au départ.

20. Procédé selon l'une des revendications 18 ou 19, **caractérisé en ce que** l'on règle une partie dynamique de la réponse latérale du véhicule à un coup de volant.

21. Procédé selon l'une des revendications 18 à 20, **caractérisé en ce que** l'on règle une partie statique de la réponse latérale du véhicule à coup de volant.

**22.** Procédé selon l'une des revendications 20 et 21, **caractérisé en ce que** l'on règle indépendamment les parties statique et dynamique de la réponse du véhicule à un coup de volant.

**23.** Procédé de commande au moyen d'un système de commande de l'angle de braquage des roues directrices du véhicule selon l'une quelconque des revendications 1 à 17, **caractérisé en ce que** l'on teste plusieurs stratégies en activant ou en désactivant les différents modules qui composent le système de commande.

FIG. 1

FIG. 2

FIG. 3

FIG. 4